Europäisches Patentamt

European Patent Office

Office européen des brevets

(11) Publication number: **0 501 385 A1**

## EUROPEAN PATENT APPLICATION

(21) Application number: **92103075.5**

(22) Date of filing: **24.02.92**

(51) Int. Cl.5: **B62K 13/08**

Priority number: TV91A-000024.

(30) Priority: **27.02.91**

(43) Date of publication of application:
**02.09.92 Bulletin 92/36**

(84) Designated Contracting States:
**DE IT**

(71) Applicant: **SPONSOR S.p.A.**
**Via Pacinotti, 6**

**I-30033 Noale (Venezia)(IT)**

(72) Inventor: **Malenotti, Franco**
**Via Cassia, 531**
**I-00189 Roma(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Frame particularly for bicycles.**

(57) The frame (2) which can be used for bicycles (1) and in particular for mountain bikes is constituted by a single-beam member (3) which has one or more seats for means (17, 18) for temporarily engaging and for adjusting (27, 28) the position of at least one support (10, 13) for the saddle (12) and/or for a pedal crank assembly (14) and/or for a derailleur (8) and/or for the hub of the front wheel (7) and/or of the rear wheel (9) and/or for the handlebar (5). A frame (2) is thus obtained which can be used optimally even in sports that require mutually different structural arrangements.

FIG. 1

The present invention relates to a frame particularly usable for bicycles and in particular for bicycles for undertaking excursions in the mountains or on rough terrain, also known as "mountain bikes".

Known commercially available frame types, used specifically to constitute the supporting structure of the bicycles, currently have the most disparate structural arrangements.

Said arrangements are forced by the particular requirements of each individual sports specialty which can be practiced with said bicycles.

Specialties divided into four categories, namely uphill, downhill, cross-country racing and parallel slalom, are in fact currently envisaged for mountain bikes.

Each of these sports necessarily requires the use of a bicycle which has a particular distribution of its weights and of the pedal crank assembly.

For example, in fact, in the practice of downhill racing it is necessary to have a pedal crank assembly which is significantly raised from the ground and a rather rearward weight distribution in order to facilitate the athlete in taking the correct position.

The practice of uphill racing instead requires the positioning of the pedal crank assembly relatively close to the ground and a forward weight distribution, toward the front wheel, in order to facilitate, in this case as well, the taking of a correct position on the part of the user, who can thus optimally relieve the forces onto the pedal crank assembly.

An arrangement of the pedal crank assembly, which is relatively spaced apart from the ground, is in fact used if application of great power is not required (this is the case of downhill racing) or if the cyclist must travel over bumpy terrains which therefore have even considerable roughness.

Thus, the problem observed in known bicycles essentially consists of the fact that if the user wishes to practice all four distinct sports in an optimum manner, he must have four different bicycles, each having a structural arrangement which is specific for the required sport.

Naturally this entails a hardly negligible burden for the user, also due to the need to use particular spare parts according to specific bicycles, which limit the diffusion of these sports among the public at large.

Manufacturers of known frames furthermore must face high costs for the execution of the equipment, since it is common to produce at least four dies for as many different sizes.

This problem is particularly felt in the case of bicycles which have a monolithic frame made of composite fibers or aluminum: in this case a number of dies equal to the number of sizes required on the market, are to be provided.

The aim of the present invention is therefore to eliminate the problems described above in known types of bicycle by providing a frame which allows the user to practice in an optimum manner various sports, such as uphill racing, downhill racing, cross-country racing and parallel slalom.

Within the scope of the above aim, an important object is to provide a frame which can be adapted according to the specific sports practice required by the user.

Another object is to provide a frame which associates with the preceding characteristics that of being adaptable to the specific build of the user.

Still another object is to provide a frame in which said modifications can be performed rapidly and easily by the user.

A further object is to provide a frame which is structurally simple and can be manufactured with conventional facilities and known machinery.

Another important object is to provide a frame which allows to limit the cost of equipment, in particular of the dies for obtaining the various frame sizes.

Not a least object is to provide a frame which associates with the preceding characteristics that of being reliable and safe in use.

This aim, the objects mentioned and others which will become apparent hereinafter are achieved by a frame, particularly for bicycles, which is characterized in that it comprises a single-beam member which has one or more seats for means for temporarily engaging and adjusting the position of at least one support for the saddle and/or for a pedal crank assembly and/or for a derailleur and/or for the hubs of the rear and/or front wheels and/or for the handlebar.

Further characteristics and advantages of the invention will become apparent from the detailed description of two particular but not exclusive embodiments, illustrated only by way of non-limitative example in the accompanying drawings, wherein:

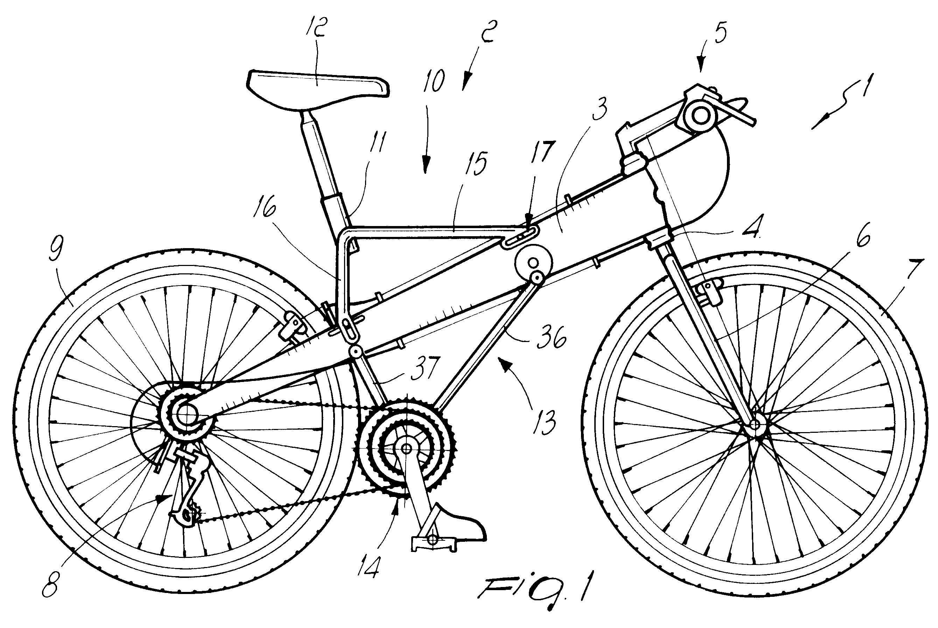

figure 1 is a side view of a first embodiment of the frame;

figure 2 is a detail view of first means for engaging a saddle support with the single-beam member and for adjusting the position of said saddle support;

figure 3 is a view, similar to the preceding one, of second means for engaging the saddle support with the single-beam member and for adjusting the position of said saddle support;

figure 4 is a view, similar to the preceding one, of third means for engaging a pedal crank assembly support with the single-beam member and for adjusting said support;

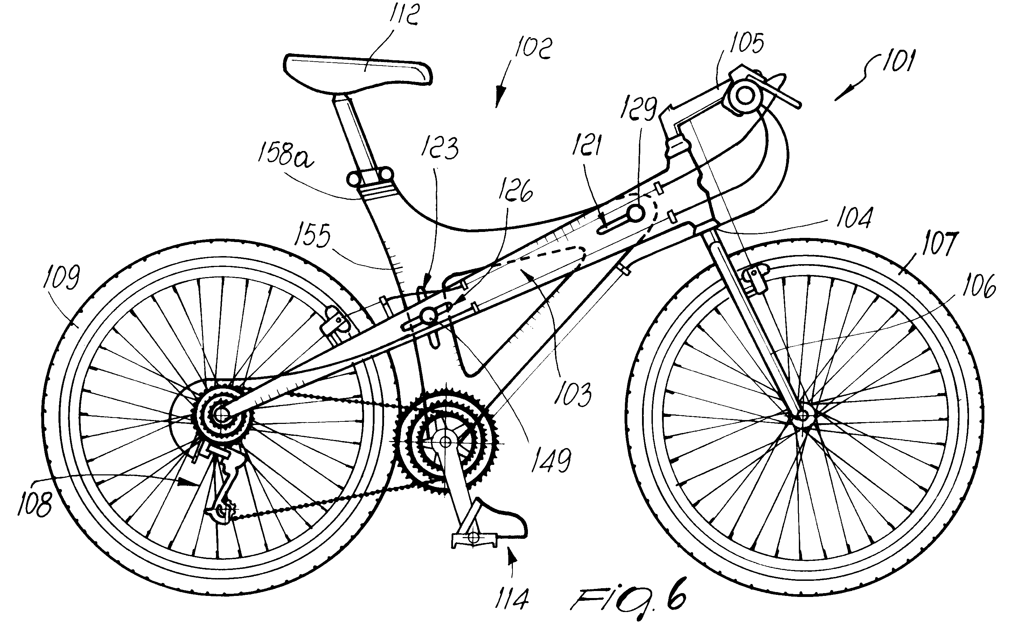

figure 5 is a view, similar to the preceding one, of fourth means for engaging a pedal crank assembly support with the single-beam member and for adjusting its position;

figure 6 is a view, similar to the view of figure 1, of a second embodiment of the frame;

figure 7 is a partial exploded view of some components of the second embodiment.

With reference to the above figures, the reference numeral 1 designates a bicycle in which there is a frame 2 which comprises a single-beam member 3.

Said single-beam member preferably has an elliptical cross-section and is connected, at its ends, by known means, to a sleeve 4 with which a handlebar 5 and a pair of forks 6 are associated; the hub of the front wheel 7 is associable with the ends of said forks 6.

At its other end, the single-beam member 3 can be connected, by known means, at a derailleur 8 and at a rear wheel 9.

The frame is furthermore constituted by a first support 10 for the sleeve 11 for coupling to a saddle 12 and by a second support 13 for a pedal crank assembly 14.

The first support 10 is essentially V-shaped and is thus constituted by a first pair of arms 15 directed toward the handlebar 5 and by a second pair of arms 16 which are directed toward the rear wheel 9.

First and second means for temporary engagement with the single-beam member 3, designated by the numerals 17 and 18, are provided respectively at the ends of the first pair of arms and of the second pair of arms.

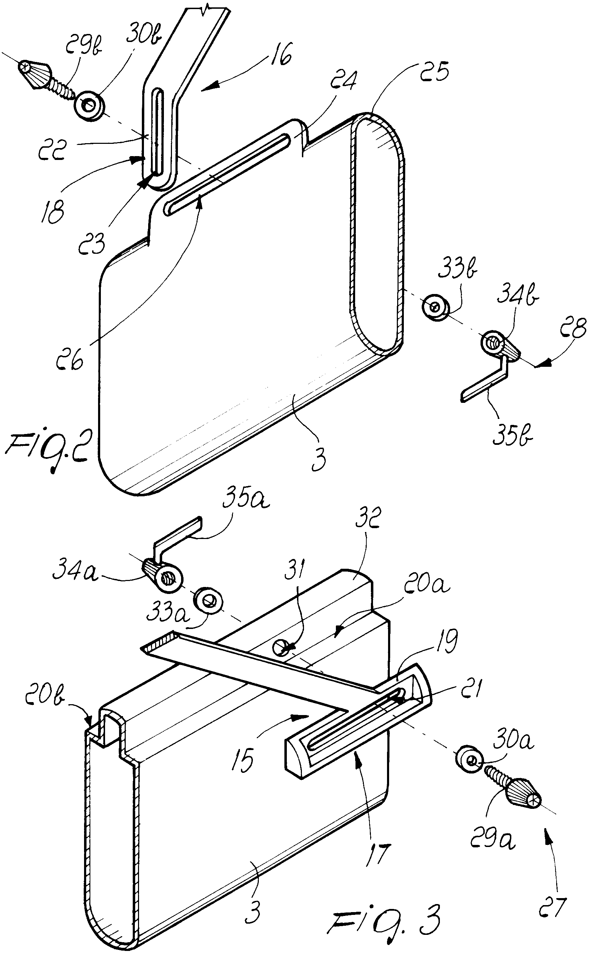

Said first engagement means can be constituted, as illustrated in figure 3, by a pair of sliders 19 which can slide at adapted guides, designated by the numerals 20a and 20b, which are defined in the upper region of the single-beam member 3 proximate to the handlebar 5.

First longitudinal slots 21 are defined at the pair of sliders 19 and are thus arranged approximately along an axis which is parallel to the longitudinal axis of the single-beam member 3.

Said second engagement means 18 can be constituted, as shown in figure 2, by a pair of wings 22 which are arranged along an axis which is approximately perpendicular to the longitudinal axis of the single-beam member 3.

A second slot 23 is defined at each of said pairs of wings 22, longitudinally thereto.

Said wing can be arranged in a region adjacent to a pair of shoulders 24 which protrude laterally with respect to the upper perimetric edge 25 of the single-beam member in a region which is adjacent to the rear wheel 9.

Each of said pairs of shoulders 24, which are mutually parallel, is provided with a third slot 26 which is arranged along an axis which is approximately parallel to the longitudinal axis of the single-beam member 3.

The first and second temporary engagement means interact respectively with first adjustment means 27 and with second adjustment means 28 which can be constituted, as shown in figures 2 and 3, by a pair of screws, designated by the numerals 29a and 29b, the stems whereof can be inserted, by means of the interposition of one or more possible first washers 30a and 30b, respectively at the first slot 21 and at the second slot 23.

The stem of the screw 29a furthermore passes through an adapted first hole 31 which is defined at the shoulder 32 of the single-beam member 3, said shoulder being defined by the pair of guides 20a and 20b.

Naturally, the stems of the pair of screws 29a and 29b affect both sliders 19 and both wings 22 and are coupled, by means of the interposition of possible second washers 33a and 33b, to a pair of complementarily threaded first bushes 34a and 34b, each of which is provided with a first grip handle for the user, designated by the numerals 35a and 35b.

Thus, by operating the pair of bushes 34a and 34b, the user can vary the position of the first support 10 and thus of the saddle 12: in fact, once said pairs of bushes have been loosened, it is possible to shift the position of the saddle 12 forward or backward according to the specific sports practice chosen.

This operation is per se extremely simple and easy, since the user requires no particular tools.

The second support 13 for the pedal crank assembly 14 is also preferably constituted by a pair of third and fourth arms, respectively designated by the numerals 36 and 37.

Said arms are mutually connected at the pedal crank assembly 14 and both have, at their free end, respectively a pair of mutually facing first and second cylindrical pins, each pair being designated by the numerals 38 and 39.

Said first and second cylindrical pins constitute respectively third and fourth means for coupling to the single-beam member 3.

Each of said pins in fact has a second axial hole, designated by the numerals 40a and 40b.

The mutually facing ends of the first cylindrical pins are rotatably associated at complementarily shaped first seats 41 which are axially perforated and are defined eccentrically with respect to a pair of disks 42 which can be arranged at complementarily shaped second seats 43 defined at the lateral surfaces 44 of the single-beam member 3.

Each disk of said pair of disks 42 and each of said second seats 43 has a third hole 45 and a fourth hole 46 which have the same axis.

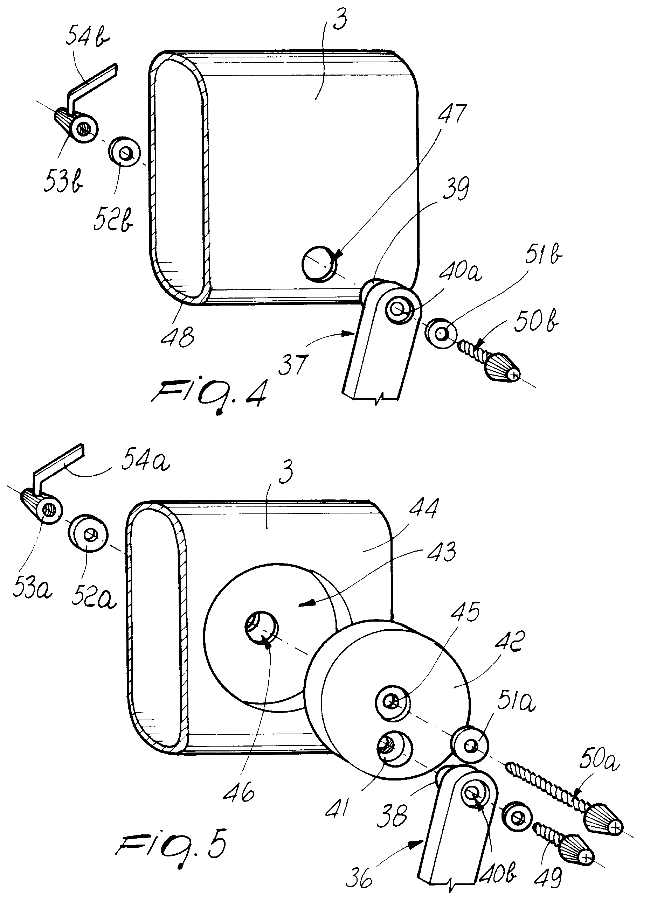

In the case of a fixed connection to the single-beam member 3, illustrated in figure 4, the facing ends of the second cylindrical pins 39 are rotatably associable at complementarily shaped third seats 47 which are axially perforated and are defined at the single-beam member 3 in a region which is adjacent to the pair of shoulders 24 and proximate to the lower perimetric edge 48 of said single-beam member 3.

The connection between the first cylindrical pins 38 of the third pair of arms 36 and the pair of disks 42 is achieved by a pair of second screws 49, the threaded stem whereof engages the complementarily threaded hole defined axially with respect to the first seats 41.

The frame furthermore comprises third and fourth means for adjusting the position of the second support 13 with respect to the single-beam member 3; said third and fourth adjustment means are constituted by a third pair of screws 50a and 50b, the threaded stems whereof are inserted, with the possible interposition of third washers 51a and 51b, in the third hole 45 of a disk 42 and then in the fourth hole 46 of the second disk of the pair of disks 42 and are then secured, with the possible interposition of fourth washers 52a and 52b, to a pair of second complementarily threaded bushes 53a and 53b which have adapted second pairs of handles 54a and 54b.

In this case also, if temporary connection to the single-beam member 3 is chosen, the second support 13 allows to adjust the height of the pedal crank assembly 14 from the ground: in fact, once the pair of second bushes 53a and 53b has been loosened, the user can vary the position of the first cylindrical pin 38 and thus of the third pair of arms 36, forcing the rotation of the pair of disks 42.

The eccentricity of the pivoting of the first cylindrical pins 38 to the pair of disks 42 in fact allows to gradually vary the position of said first cylindrical pins 38 with respect to the ground.

This movement is facilitated by the equal movement which can be imparted to the second cylindrical pins 39 which are freely pivoted at the third seats 47.

It has thus been observed that the invention has achieved the intended aim and objects, a bicycle frame having been provided which allows to limit costs for the manufacture of the equipment, since it is possible to provide just one single-beam member and to obtain the various sizes by possibly varying the application points of the supports.

Furthermore, if one chooses the solution of a temporary connection of the supports to the single-beam member and of an adjustment of their position, the frame can be used for all the various specialties of mountain biking, adopting an optimum configuration for each of them.

In fact, the presence of the means for temporarily engaging the first and second supports and for adjusting their position with respect to the single-beam member allows to vary the position of the first support 10 and thus of the saddle 12, so as to be able to move said saddle toward the rear wheel or toward the front wheel and at the same time vary the position of the pedal crank assembly with respect to the ground.

These adjustments are performed very rapidly and easily and thus allow the user to vary the configuration of the frame both according to the particular specialty, and therefore according to the racing ground, and to his own build.

It is thus possible to have a single vehicle which can be adapted to the specific requirements, thus limiting on one hand the cost for the purchase and maintenance thereof and on the other hand increasing the possibilities of adjustment on the part of the user.

The solutions described regarding the adjustment of the position of the first support 10 and of the second support 13 with respect to the single-beam member 3 can be used by interchanging them or by using a particular solution for all links.

This means that the solution which is deemed most suitable among those described can be used at the ends of the first pair of arms 15, of the second pair of arms 16, of the third pair of arms 36 and of the fourth pair of arms 37.

The invention is naturally susceptible to numerous modifications and variations, all of which are within the scope of the same inventive concept.

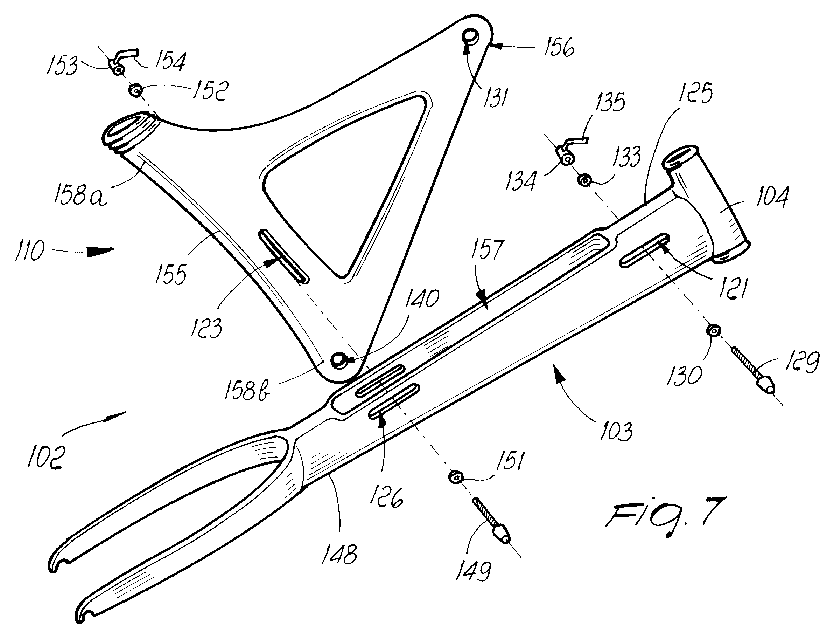

Thus, for example, figures 6 and 7 illustrate a second embodiment for a bicycle 101 which comprises a frame 102 which comprises a single-beam member 103 which is connected, at its end, to the sleeve 104 for a handlebar 105 with which a pair of forks 106 for connecting a hub of the front wheel 107 is associated, while the single-beam member 103 is associated, at its other end, with a possible derailleur 108 and with a rear wheel 109.

The frame 102 is furthermore constituted by a single support 110 which is essentially shaped like an isosceles triangle, which has a slightly arc-like base 155 directed toward the rear wheel 109 and the vertex 156 opposite thereto directed toward the sleeve 104.

Said support 110 can be inserted in an adapted opening 157 which is defined longitudinally with respect to the single-beam member 103 along a plane which passes through the upper and lower perimetric edges 125 and 148.

It is thus possible to insert the support 110 through said opening 157, arranging the vertex 156 inside the single-beam member 103 and making the ends 158a and 158b of the base 155 protrude respectively above and below the single-beam member 103.

A first hole 131 is defined at the vertex 156 and can be arranged at a pair of first slots 121 defined longitudinally with respect to the single-beam member 103 at 144 and proximate to the sleeve 104.

A space such as to accommodate the vertex 156 of the first support 110 is in any case defined at the first slots 121.

The frame 102 furthermore comprises a first screw 129 which, with the interposition of a possible first washer 130, is caused to pass through the first slots 121, passing through the first hole 131 of the support 110 as well.

A first bush 134 is associable with the first screw 129, with the possible interposition of a second washer 133, and is provided with an adapted handle 135 which can be operated by the user.

Second slots 123 are furthermore defined at the base 155 of the support 110 and may be slightly curved with respect to said base, so as to define a concavity toward the first slots 121.

Once the support 110 has been inserted within the opening 157, the second slots 123 arrange themselves so that they face a pair of third slots 126 defined longitudinally to the single-beam member 103.

The locking of the position of the support 110 is allowed by the presence of a second screw 149 the stem whereof is passed, possibly with the interposition of a third washer 151, through the third slots 126 and at the same time through the second slots 123 and is then secured, with the possible interposition of a fourth washer 152, to a second bush 153 which has a grip handle 154 for the user.

Naturally, an adapted thread is provided at the end 158a of the base 155 in order to secure a saddle 112, whereas the execution of an adapted second hole 140 is provided for at the end 158b in order to associate an adapted pedal crank assembly 114 with the support 110.

This embodiment, too, allows to achieve the intended aim and objects: loosening of the bushes 134 and 153 is in fact matched by the possibility of varying the position of the support 110 by moving it along an axis which is longitudinal to the single-beam member 103, and of raising or lowering the saddle 112 and the pedal crank assembly 114, since the support 110 is pivoted, by means of the first screw 129, to the single-beam member 103.

Solutions which provide not only an exclusively continuous adjustment of the position of the first and second supports with respect to the single-beam member but also a discrete adjustment of said position, are considered as protected.

In this sense, contiguous holes might be provided instead of the slots.

The materials and the dimensions of the individual components of the structure may also naturally be the most adapted according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Frame particularly for bicycles, characterized in that it comprises a single-beam member which has one or more seats for means for temporarily engaging and adjusting the position of at least one support for the saddle and/or for a pedal crank assembly and/or for a derailleur and/or for the hubs of the rear and/or front wheels and/or for the handlebar.

2. Frame according to claim 1, characterized in that it comprises a first support for a sleeve for coupling to a saddle and a second support for a pedal crank assembly, said first support being essentially V-shaped and being constituted by a first pair of arms, or by a single arm, directed toward said handlebar, and by a second pair of arms, or by a single arm, directed toward said rear wheel.

3. Frame according to claims 1 and 2, characterized in that first and second means for temporarily engaging said single-beam member are respectively provided at the ends of said first and/or second pair of arms.

4. Frame according to claims 1 and 3, characterized in that said first temporary engagement means are constituted by a slider or by a pair of sliders which can slide at adapted guides defined in an upward region of said single-beam member proximate to said handlebar, a shoulder being defined between said guides.

5. Frame according to claims 1 and 4, characterized in that first longitudinal slots are defined at said pair of sliders which are arranged approximately along an axis which is parallel to the longitudinal axis of said single-beam member.

6. Frame according to claims 1, 3 and 5, characterized in that said second temporary engagement means are constituted by a pair of wings which are arranged along an axis which is approximately perpendicular to the longitudinal axis of said single-beam member, a second slot being defined at each of said pairs of wings along a longitudinal axis, said second slot being arrangeable in a region adjacent to a pair of shoulders which protrude laterally with respect to the upper perimetric edge of said single-beam member in a region adjacent to said rear wheel.

7. Frame according to claims 1 and 6, characterized in that each of said pairs of shoulders, which are mutually parallel, has a third slot arranged along an axis which is approximately parallel to the longitudinal axis of said single-beam member.

8. Frame according to claims 1, 3 and 7, characterized in that said first and/or second temporary engagement means interact respectively with first and/or second adjustment means which are constituted by a pair of screws the stems whereof can be inserted, with the interposition of one or more possible first washers, respectively at said first and second slots defined on said sliders and wings, the stem affecting said first slot and passing at an adapted first hole defined on a shoulder which is provided on said single-beam member and is defined by said pair of guides, said stems of said pair of screws being coupled, with the interposition of possible second washers, to a pair of complementarily threaded first bushes, each of which is provided with a first grip handle for the user.

9. Frame according to one or more of the preceding claims, characterized in that said second support is preferably constituted by a single arm or by a pair of third and fourth arms which are mutually connected at said pedal crank assembly, said arms having, at their free ends, respectively a pair of first and second cylindrical pins which face one another and have a second axial hole, said first and second cylindrical pins respectively constituting third and fourth means for temporarily engaging said single-beam member.

10. Frame according to claims 1 and 9, characterized in that the mutually facing ends of said first and/or second cylindrical pins are rotatably associable at complementarily shaped first seats which are axially perforated and are defined eccentrically with respect to a pair of disks which can be arranged at complementarily shaped second seats defined at the lateral surfaces of said single-beam member.

11. Frame according to claims 1 and 10, characterized in that each disk of said pair of disks and each of said second seats has a third hole and a fourth hole which have the same axis.

12. Frame according to claims 1, 3, 9 and 11, characterized in that the facing ends of said first and/or second cylindrical pins are rotatably associable at complementarily shaped third seats which are axially perforated and are defined at said single-beam member in a region which is adjacent to said pair of shoulders or in a region which is adjacent to said rear wheel, proximate to the lower perimetric edge of said single-beam member.

13. Frame according to claims 1 and 12, characterized in that the link between said first cylindrical pins of said third pair of arms and said pair of disks occurs by means of a pair of second screws the threaded stem whereof engages at the complementarily threaded hole defined axially to said first seats.

14. Frame according to one or more of the preceding claims, characterized in that it comprises third and fourth means for adjusting the position of said second support with respect to said single-beam member, said third and fourth adjustment means being constituted by a third pair of screws the threaded stems whereof are inserted, with the possible interposition of third washers, at said third hole of one of said pair of disks, then at said fourth hole of the other disk of said pair of disks and are then secured, with the possible interposition of fourth washers, to a pair of second complementarily threaded bushes which have adapted second pairs of handles.

15. Frame according to one or more of the preceding claims, characterized in that it comprises, in a second embodiment, a single support which is essentially shaped like an isosceles triangle with a slightly curved base directed toward said rear wheel and with its vertex opposite to said base directed toward said sleeve, said single support being insertable at an adapted opening defined longitudinally to said single-beam member along a plane which passes through the upper and lower perimetric edges of said single-beam member.

16. Frame according to claims 1 and 15, characterized in that said single support can be inserted in said opening by arranging said vertex inside said single-beam member and by making the ends of said base protrude respectively above and below said single-beam member.

17. Frame according to claims 1 and 16, characterized in that a first hole is defined at said vertex and can be arranged at a pair of first slots defined longitudinally to said single-beam member at and proximate to said sleeve, a space such as to accommodate said vertex of said single support being provided at said first slots.

18. Frame according to claims 1 and 17, characterized in that it comprises a first screw which passes, with the interposition of a possible first washer, at said first slots and through said first hole of said single support, a first bush being associable with said first screw, with the possible interposition of a second washer, and being provided with an adapted handle which can be operated by the user.

19. Frame according to claims 1 and 18, characterized in that second slots are defined at said base of said single support and are possibly slightly curved with respect to said base so as to define a concavity toward said first slots, said second slots arranging themselves so as to face a pair of third slots defined longitudinally to said single-beam member.

20. Frame according to claims 1 and 19, characterized in that the locking of the position of said single support is allowed by the presence of a second screw the stem whereof passes, possibly with the interposition of a third washer, through said second and third slots and is then secured, with the possible interposition of a fourth washer, to a second bush which has a grip handle for the user, an adapted thread being provided at an end of said base for securing a saddle, an adapted second hole being provided at the other end in order to associate an adapted pedal crank assembly with said single support.

21. Frame according to one or more of the preceding claims, characterized in that said means for temporary engagement and/or adjustment can be arranged indifferently on said first and/or second support and/or on said single-beam member.

Fig. 1

EP 0 501 385 A1

Fig.2

Fig.3

Fig. 4

Fig. 5

Fig.6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | US-A-5 072 961 (D.HUPPE) <br> * column 3, line 9 - line 62; figures 1,2 * | 1,21 | B62K13/08 |
| A | | 2,4 | |
| X | FR-A-2 422 545 (D.NOUACER) <br> * page 2, line 8 - page 3, line 15; figures 1-8 * | 1,21 | |
| X | GB-A-194 012 (E.FIELD) <br> * page 2, line 32 - line 77; figures 1-4 * | 1,21 | |
| A | | 4,5 | |
| A | DE-A-3 837 018 (R.DOCTER) <br><br> * the whole document * | 1,15,16, 21 | |
| A | US-A-4 909 537 (A.TRATNER) <br> * column 2, line 40 - column 4, line 6; figures 1-3 * | 1,2,21 | |
| A | EP-A-0 163 988 (PAIOLI S.P.A) <br> * page 2, line 16 - page 6, line 14; figures 1-3 * | 1,2,21 | TECHNICAL FIELDS SEARCHED (Int. Cl.5 ) <br><br> B62K |

The present search report has been drawn up for all claims

| Place of search | Date of completion of the search | Examiner |
|---|---|---|
| THE HAGUE | 18 JUNE 1992 | CZAJKOWSKI A.R. |

EPO FORM 1503 03.82 (P0401)